# EUROPEAN PATENT APPLICATION

(11) **EP 4 105 463 A1**
(43) Date of publication of application: **21.12.2022**
(21) Application number: 22174031.9
(22) Date of filing: 18.05.2022
(51) Int. Cl.: F02C 7/14, F02K 3/115

(54) **GAS TURBINE ENGINE**

(30) Priority: 16.06.2021 GB 202108550
(71) Applicant: Rolls-Royce plc, London N1 9FX (GB)
(72) Inventor: Price, Harry, Derby, DE24 8BJ (GB); Elliott, Michael, Derby, DE24 8BJ (GB)
(74) Representative: Rolls-Royce plc

(57) **Abstract**

A gas turbine engine including an engine core having an engine core duct, a nacelle, and a bypass duct for receiving a bypass air flow accelerated by a fan. The core duct which is designed for receiving a core air flow accelerated by the fan, is located radially inside the bypass duct. Between the core duct and the bypass duct a housing is provided, having an outer wall which is an inner wall (core fairing) of the bypass duct, and having an inner wall which is the outer wall of the core duct. The housing is extending axially from an area of the gas turbine engine downstream of the fan, and is splitting the air flow accelerated by the fan in an axially forward area of the housing so that the air flows partly into the bypass duct and partly into the core duct. At least two heat exchangers for cooling engine based oil using an air flow which is passed from the fan to the heat exchangers and from the heat exchangers into the bypass duct is mounted in the housing. A flow passage inside the housing delivering the air flow from an annular inlet of the flow passage to the heat exchanger, and returning the air flow from the heat exchanger through an annular outlet in the radially outer annular wall of the housing into the bypass duct is provided, wherein the inlet of the flow passage is located upstream the heat exchanger, and is designed as EES-style-inlet (43) and/or IPC-style-inlet and/or OGV-style-inlet. The at least two heat exchangers extend circumferentially and a flow divider is provided between facing ends of the heat exchangers that diverts the air flow in direction to the heat exchangers respectively.

## Description

### Field of the invention

The present invention relates to a gas turbine engine comprising an engine core surrounded by a core fairing having a radial inner wall and a radial outer wall, which is spaced at least partially apart from the radial inner wall in the radial direction.

### Background

European patent EP 3 483 414 B1 discloses a geared turbofan gas turbine engine with a power gearbox. The gas turbine engine includes an engine core duct, also known as 'gas path', and a bypass duct surrounding the core duct, so that the core duct is located radially inside the bypass duct. The core duct has, in radial direction, an outer wall, which is spaced at least partially apart from an inner wall of the bypass duct. Further, the gas turbine engine includes a propulsive fan and a nacelle surrounding the propulsive fan and the engine core duct. The bypass duct receives a bypass air flow accelerated by the propulsive fan, and is defined between an outer wall (nacelle) and the inner wall (core fairing) of the bypass duct. The core duct or gas path respectively, receives a core air flow accelerated by the propulsive fan.

A heat exchanger for cooling engine based oil using an air flow which is passed from the fan to the heat exchanger and from the heat exchanger into the bypass duct is proposed, and is mounted radially between the bypass duct inner wall (core fairing) and the outer wall of the core duct (gas path).

Disadvantageously the heat exchanger is located in the same area as ducts, thrust struts, an auxiliary gear box and further key features. This results in that these key features and also the heat exchanger could not be designed independently from each other.

Furthermore, it is a disadvantage that a large geared turbofan gas turbine engine requires many large heat exchangers like so called MACOCs (matrix air cooled oil coolers) to effectively cool engine based oil for the power gearbox, aircraft generators and other engine based oil systems. The engine oil may also have a higher temperature due to the presence of a lean burn fuel system on the engine. This results in undesired large external dimensions of the volume occupied by the oil heat system installation and, hence, of the gas turbine engine.

It is an object of the present invention to provide a gas turbine engine in which oil can be tempered to the required extent, and which has small external dimensions. In particular it is an object of the present invention to minimise the volume occupied by the oil heat management system installation.

### Summary

The present invention relates to a gas turbine engine including:
an engine core having an engine core duct, also called "gas path", surrounded by an annular outer wall and having a radially annular inner wall;
a nacelle surrounding the engine core and a propulsive fan;
a bypass duct for receiving a bypass air flow accelerated by the propulsive fan, the bypass duct being defined between the nacelle and the core duct which is designed for receiving a core air flow accelerated by the propulsive fan, and which is located radially inside the bypass duct;
a housing having an outer wall which is an inner wall (core fairing) of the bypass duct, and having an inner wall which is the outer wall of the core duct;
whereby the housing is extending axially from an area of the gas turbine engine downstream of the fan and is splitting the air flow accelerated by the fan in an axially forward area of the housing so that the air flows partly into the bypass duct and partly into the core duct;
at least two heat exchangers for cooling engine based oil using an air flow which is passed from the fan to the heat exchangers and from the heat exchangers into the bypass duct, the heat exchanger being mounted radially between the radially inner annular wall and the radially outer annular wall of the housing;
a flow passage inside the housing delivering the air flow from an annular inlet of the flow passage to the heat exchanger, and returning the air flow from the heat exchangers through an annular outlet in the radially outer annular wall of the housing into the bypass duct;
wherein the inlet of the flow passage is located upstream the heat exchangers, and is located in the forward area of the gas turbine engine, or of the housing respectively, between the radially inner annular wall and the radially outer annular wall of the housing; and/or
in the radially inner annular wall of the housing downstream of the forward area of the housing and of outer guide vanes extending radially through the bypass duct, and downstream of engine section stators extending radially through the core duct, so air enters the inlet from a stage of an IP-compressor unit; and/or
in the radially outer annular wall of the housing directly downstream of the outer guide vanes and of the forward area of the housing;
wherein the inlet surrounds the engine core circumferentially; and
wherein at least two heat exchangers (extend circumferentially, whereby a flow divider is provided between facing ends of the heat exchangers that diverts the air flow in direction to the heat exchangers (42; 42A to 42G) respectively.

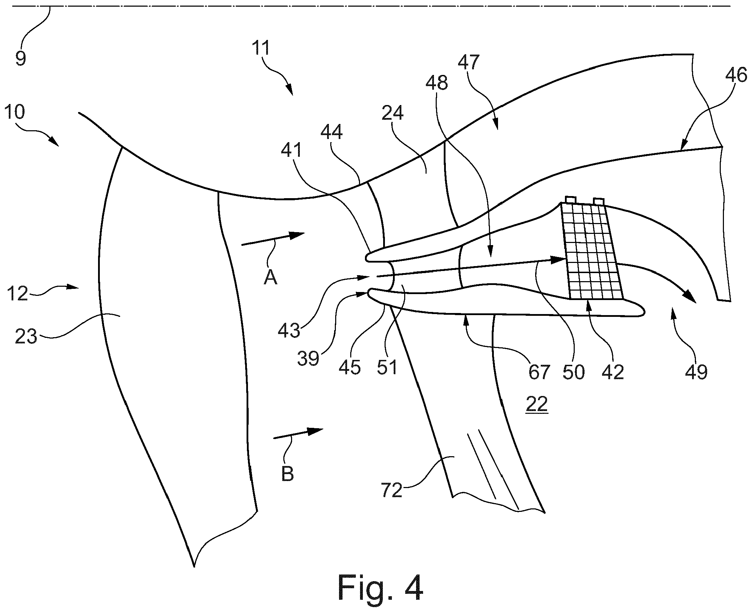

An embodiment with the annular inlet of the flow passage located in the forward area of the core duct (gas path)-bypass duct splitter between the radially inner wall and the radially outer wall of the housing is also referred to as ESS-style-inlet in the following (see in particular Fig. 4).

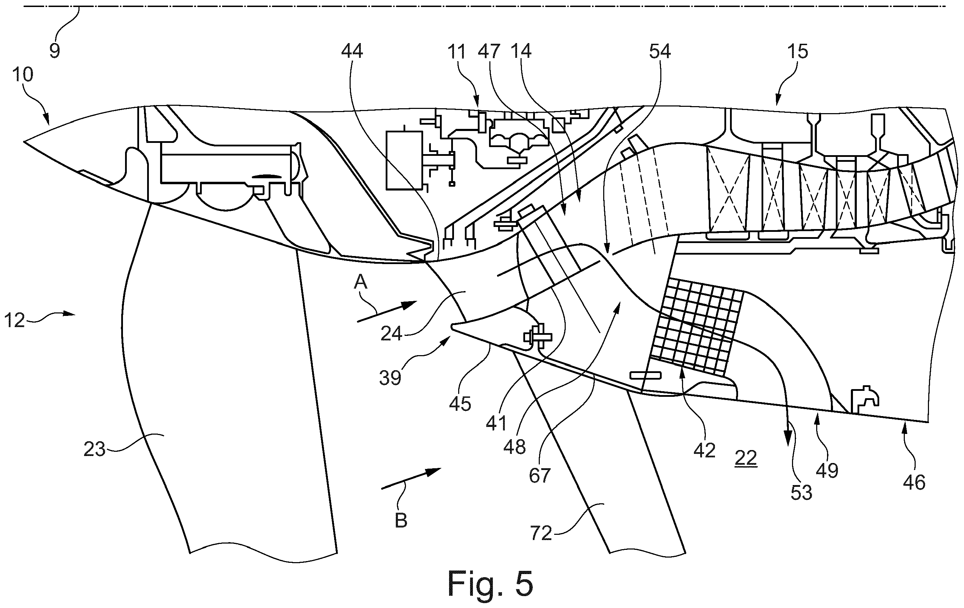

The solution, wherein alternatively, or in addition thereto, the annular inlet is formed in the radially outer core duct (gas path) wall and extends radially through the forward core zone (defined by a volume formed between the core duct outer wall and bypass duct inner wall), is also referred to as IPC-style-inlet in the following (see in particular Fig. 5). Then, air from the core duct or the gas path respectively, enters the inlet either upstream or downstream of the IP compressor of the gas turbine engine.

In such an embodiment, the air flow, which is guided from the inlet to the heat exchanger, may fill the so called torque box of the gas turbine engine. The torque box includes the structure between the OGV, ESS and a fan OGV support wall. Then, this air passes through the heat exchanger which may be mounted on said wall. The air which is led through the heat exchanger is exhausted to the bypass downstream of the OGVs.

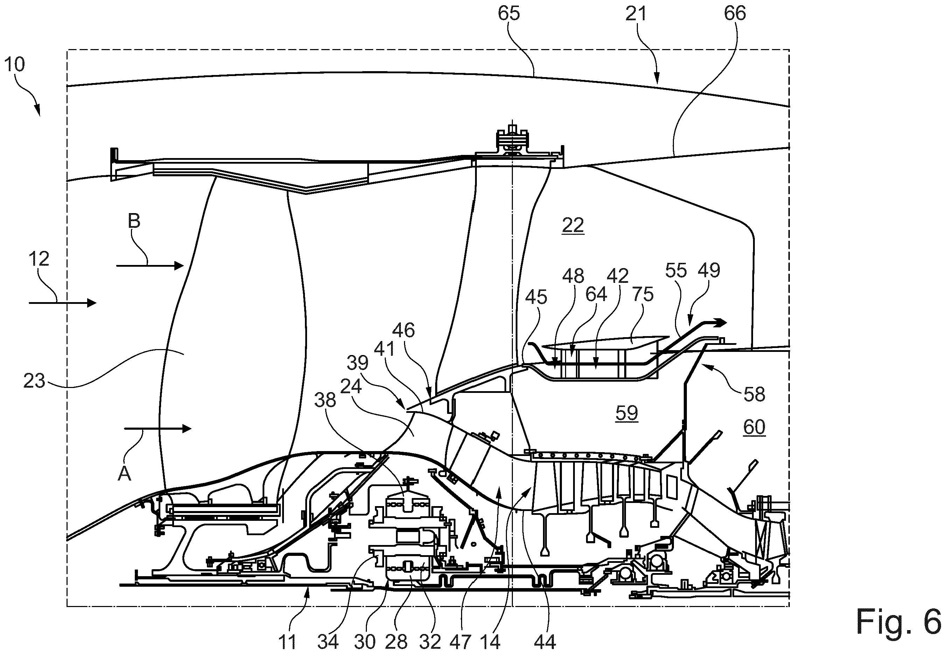

The solution, wherein alternatively, or in addition thereto, the annular inlet is formed in the outer wall of the housing directly downstream of Fan outlet guide vanes (FOGV) is also referred to as OGV-style-inlet in the following (see in particular Fig. 6).

If the circumferential annular inlet is located above and behind the OGV which may be located directly downstream the fan, the OGV-inlet may be built into the radially inner annular wall barrel of the housing which is extending around the inner circumference of the bypass duct. In this case the OGV-inlet sits proud into the aeroline to make use of the total pressure available

In all of the before mentioned embodiments, the annular inlet surrounds the majority of the engine core circumferentially and the exhaust air flow from the heat exchangers is fed into the bypass duct. The arrangement and location of the annular inlet and outlet is advantageous as it ejects heat from the heat exchangers into the bypass duct in advance of the so called bypass cold nozzle and is responsible for lower fuel burn of the gas turbine engine of the present invention.

Whereas the heat exchangers or coolers respectively, may be arranged circumferentially around the annular inlet, also wegdes/bifurcations within the annular inlet may be used to divide flow between individual coolers.

Thus, compared to known solutions, each inlet of the gas turbine engine according to the present invention is an annular inlet extending circumferentially in difference to a separate inlet for each heat exchanger. This helps to avoid bypass duct losses and upstream impacts on the fan and OGV, e. g., fan-forcing or flutter.

A further advantage of the embodiments is that the installation of the heat exchangers can be located close to the Fan OGVs. The installation space required by the heat exchangers does thereby not collide with the required installation space of other key engine features like ducts, thrust struts and an auxiliary gearbox of the gas turbine engine. This allows the design of these features independent of the flow passage design.

If the heat exchangers are located forward the heat exchangers may be mounted, for example, over the radially wider intermediate pressure compressor (IPC) and not over the combustion chamber outer casing (CCOC), so that the size and weight of the heat exchanger mounts can be decreased.

Furthermore, the forward location proposed removes the need for individual heat exchanger mounts by mounting the heat exchanger directly to, for instance, a firewall or core fairing that are provided for other purposes. With the inlet also upstream of intermediate pressure (IP) bleed outlets ingestion of hot IP bleed air and debris is prevented.

The advantageous positioning of the inlet, the heat exchangers and the outlet of the flow passage ensures mixing of the heat exchanger exhaust with the air flow in the bypass duct ahead of the cold nozzle, and provides a SFC (Specific Fuel Consumption) benefit, which cannot be guaranteed when exhausting over a high pressure turbine.

Moreover, the forward location of the inlet and outlet removes the need for an interface with the TRU and hence eliminates any loads from the TRU into the heat exchanger mounts of the gas turbine engine according to the present invention instead.

The heat exchangers may be designed as a so called matrix air-cooled oil cooler.

In one embodiment of the gas turbine engine according to the present invention the flow passage is comprising guide vanes upstream the heat exchangers to straighten out the swirl air from the fan.

These inlet guide vanes may transmit load from the fan case to the engine core via the OGV's and the ESS if an ESS-inlet is used (see FIG 4).

In a further embodiment of the gas turbine engine according to the present invention, the annular inlet of the flow passage is located in the (bypass duct inner wall (core fairing) (see FIG 6), and comprises a ram scoop that extends in a radial outwards and circumferential direction into the bypass duct and guides the air flow into the flow passage. This helps to generate an adequate pressure drop over the heat exchanger which is necessary for a desired cooling performance.

The gas turbine engine comprises at least two heat exchangers that extend in a circumferential direction. A flow divider is provided between facing ends of the heat exchangers that diverts the air flow in direction to the heat exchangers respectively.

As mentioned before, a firewall may be provided. The fire wall may separate the heat exchanger from a fire zone. Further, the firewall could make the front core zone a flammable fluid zone, thus enabling the design of the ducts to be simpler, less expensive and lighter. The need for any heat exchanger exhaust ducts could be removed if the heat exchangers are mounted on the fire wall.

Moreover, by creating a segregated zone with the use of a firewall the heat exchanger exhaust air can be vented into the zone and exhausted into the bypass duct by means of louvered outlets located in the core fairing.

Excess air from the circumferential inlet may be fed to other systems of the gas turbine engine, whereby inlets for these systems are placed in between the heat exchangers. By way of example the excess air could be used for the turbine case cooling (TCC) system and for the core zone ventilation.

An ejector according to claim 10 may be provided in the flow path downstream of the heat exchangers that accelerates the air flow downstream the heat exchangers. This is advantageous in operating condition ranges of the gas turbine engine with low air flow rates, since a desired air flow rate can be generated through the heat exchangers by means of the ejector.

The ejector may be fluidly coupled with a cabin blower unit or the core gas path compressor bleed.

The radially inner wall of the bypass duct (core fairing) may comprise at least one opening which is covered by at least one removable panel to allow access to the zone underneath. By way of example to gain access to the gas generator propulsor split line and/or line replaceable units. The number of removable panels can be determined by the extent of circumferential access required.

Facing ends of the heat exchangers may be spaced apart from each other in circumferential direction supporting thermal growth and oil porting.

As noted elsewhere herein, the present invention relates to a gas turbine engine. Such a gas turbine engine may include an engine core comprising a turbine, a combustor, a compressor, and a core shaft connecting the turbine to the compressor. Such a gas turbine engine may comprise a fan (having fan blades) located upstream of the engine core. The gas turbine engine comprises a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear or from a separate turbine. The core shaft may rigidly connect the turbine and the compressor, such that the turbine and compressor rotate at the same speed (with the fan rotating at a lower speed).

The gas turbine engine as described and claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e., the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e., the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e., the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e., the values may form upper or lower bounds).

Gas turbine engines in accordance with the present invention may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e., the values may form upper or lower bounds). The bypass duct may be substantially annular. The bypass duct may be radially outside the engine core. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e., the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e., the values may form upper or lower bounds). Such engines may be particularly efficient in comparison with conventional gas turbine engines.

A gas turbine engine as described and claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e., the values may form upper or lower bounds). The thrust referred to above may be the maximum net thrust at standard atmospheric conditions at sea level plus 15 °C (ambient pressure 101.3kPa, temperature 30 °C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e., the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e., the values may form upper or lower bounds). The maximum TET may occur, for example, at a high thrust condition, for example at a maximum take-off (MTO) condition.

A fan blade and/or aerofoil portion of a fan blade described herein may be manufactured from any suitable material or combination of materials. For example, at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and claimed herein may or may not be provided with a variable area nozzle (VAN). Such a variable area nozzle may allow the exit area of the bypass duct to be varied in use. The general principles of the present invention may apply to engines with or without a VAN.

The fan of a gas turbine as described and claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 °C.

As used anywhere herein, "cruise" or "cruise conditions" may mean the aerodynamic design point. Such an aerodynamic design point (ADP) may correspond to the conditions, for example, one or more of the Mach Number, environmental conditions and thrust requirement, for which the fan is designed to operate. This may mean, for example, the conditions at which the fan or gas turbine engine is designed to have optimum efficiency.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### Brief description of the drawings

Embodiments will now be described by way of example only, with reference to the Figures, in which:
**Fig. 1** is a sectional side view of a gas turbine engine;
**Fig. 2** is a close up sectional side view of an upstream portion of a gas turbine engine;
**Fig. 3** is a partially cut-away view of a gearbox for a gas turbine engine;
**Fig. 4** is an enlarged partial longitudinal sectional view of an embodiment of a gas turbine engine with a heat exchanger which can be supplied with an air flow via a so called ESS-style-annular inlet located at a core duct (the gas path) bypass duct splitter with an inlet flow path between a core duct (gas path) outer wall and a core fairing (bypass duct) inner wall and directly downstream of a propulsive fan of the engine;
**Fig. 5** is an enlarged partial longitudinal sectional view of a further embodiment of a gas turbine engine with a heat exchanger which can be supplied with an annular air flow via a so called IPC-style-inlet located in the outer wall of the core duct (the gas path);
**Fig. 6** is an enlarged partial longitudinal sectional view of a further embodiment of a gas turbine engine with a heat exchanger which can be supplied with an annular air flow via a so called OGV-style-inlet located in the core fairing (bypass duct inner wall) directly downstream of fan OGV and with a firewall;
**Fig. 7** is a schematic cross-sectional view of a gas turbine engine with several heat exchangers extending in the circumferential direction; and
**Fig. 8** is a three-dimensional partial view of an embodiment of a gas turbine engine which is comprising several heat exchangers.

The following table lists the reference numerals used in the drawings:

| Ref no. | Feature |
|---|---|
| **A** | Core airflow |
| **B** | Bypass airflow |
| **9** | Principal and rotational axis (of engine) |
| **10** | Gas turbine engine |
| **11** | Core |
| **12** | Air intake |
| **14** | Low pressure compressor |
| **15** | High pressure compressor |
| **16** | Combustion equipment |
| **17** | High pressure turbine |
| **18** | Bypass exhaust nozzle |
| **19** | Low pressure turbine |
| **20** | Core exhaust nozzle |
| **21** | Fan nacelle or fan case |
| **22** | Bypass duct |
| **23** | Fan |
| **24** | Stationary supporting structure |
| **26** | Shaft |
| **27** | Interconnecting shaft |
| **28** | Sun wheel or sun gear |
| **30** | Epicyclic gear arrangement |
| **32** | Planet gears |
| **34** | Planet carrier |
| **36** | Linkage |
| **38** | Ring gear |
| **39** | Forward area of the housing |
| **40** | Linkage |
| **41** | Core duct outer wall |
| **42** | Heat exchanger |
| **42A to 42G** | Heat exchanger |
| **43** | Inlet of the flow passage, ESS-style-inlet |
| **44** | Core duct inner wall |
| **45** | Core fairing; bypass duct inner wall; housing outer wall |
| **46** | Housing |
| **47** | Core duct |
| **48** | Flow passage |
| **49** | Outlet of the flow passage |
| **50** | Air flow |
| **51** | Guide vane |
| **53** | Air flow |
| **54** | Inlet of the flow passage, IPC-style-inlet |
| **55** | Air flow |
| **56** | Inlet of the flow passage, OGV-style-inlet |
| **58** | Firewall |
| **59** | Zone |
| **60** | Further zone |
| **64** | Divider |
| **65** | Nacelle outer wall |
| **66** | Nacelle inner wall |
| **67** | OGV casing |
| **72** | Outer guide vane |
| **75** | Radially outer annular wall, annular cooling duct outer wall |

### Detailed description

Aspects and embodiments of the present invention will now be discussed with reference to the accompanying figures. Further aspects and embodiments will be apparent to those skilled in the art.

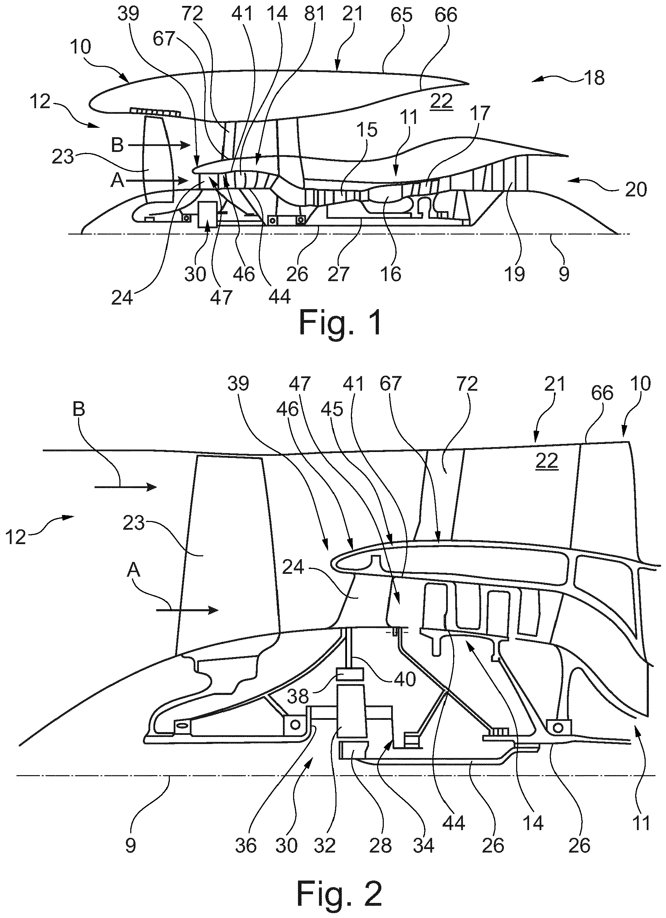

**Fig. 1** illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in **Fig. 2****.** The low pressure turbine 19 (see Fig. 1) drives the shaft 26, which is coupled to a sun wheel, or sun gear 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

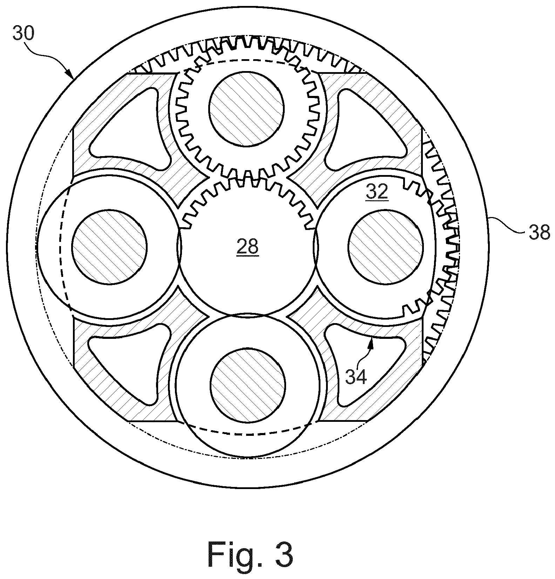

The epicyclic gearbox 30 is shown by way of example in greater detail in Fig. 3. Each of the sun gear 28, planet gears 32 and ring gear 38 comprise teeth about their periphery to intermesh with the other gears. However, for clarity only exemplary portions of the teeth are illustrated in Fig. 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Fig. 2 and Fig. 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Fig. 2 and Fig. 3 is by way of example only, and various alternatives are within the scope of the present invention. Purely by way of example, any suitable arrangement may be used for locating the gearbox 30 in the engine 10 and/or for connecting the gearbox 30 to the engine 10. By way of further example, the connections (such as the linkages 36, 40 in the Fig. 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the invention is not limited to the exemplary arrangement of Fig. 2. For example, where the gearbox 30 has a star arrangement (described above), the skilled person would readily understand that the arrangement of output and support linkages and bearing locations would typically be different to that shown by way of example in Fig. 2.

Accordingly, the present invention extends to a gas turbine engine having any arrangement of gearbox styles (for example star or planetary), support structures, input and output shaft arrangement, and bearing locations.

Optionally, the gearbox may drive additional and/or alternative components (e.g., the intermediate pressure compressor and/or a booster compressor).

Other gas turbine engines to which the present invention may be applied may have alternative configurations. For example, such engines may have an alternative number of compressors and/or turbines and/or an alternative number of interconnecting shafts. By way of further example, the gas turbine engine shown in Fig. 1 has a split flow nozzle 20, 22 meaning that the flow through the bypass duct 22 has its own nozzle that is separate to and radially outside the engine core nozzle 20. However, this is not limiting, and any aspect of the present invention may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the invention may apply, for example, to any type of gas turbine engine, such as an open rotor (in which the fan stage is not surrounded by a nacelle) or turboprop engine, for example.

The geometry of the gas turbine engine 10, and components thereof, is defined by a conventional axis system, comprising an axial direction (which is aligned with the rotational axis 9), a radial direction (in the bottom-to-top direction in Fig. 1), and a circumferential direction (perpendicular to the page in the Fig. 1 view). The axial, radial and circumferential directions are mutually perpendicular.

The engine core 11 is surrounded by a core duct (the gas path) 47. The core duct 47 comprises an inner wall 44 and an outer wall 41 which is radially spaced apart from an inner wall 45 of the bypass duct 22, also called a core fairing. Radially between the core duct 47 and the bypass duct 22 is a so called housing 46 provided, wherein the outer wall of the housing 46 is formed by the radially inner wall (core fairing) 45 of the bypass duct 22, and the radially inner wall of the housing 46 is formed by the radially outer wall 41 of the core duct 47.

The bypass duct 22 is receiving the bypass air flow B accelerated by the propulsive fan 23 and is defined between the nacelle 21 and the bypass duct inner wall (core fairing) 45. The core duct 47 for receiving the core airflow A accelerated by the propulsive fan 23 is defined radially inside the core duct outer wall 41 and radially outside the core duct inner wall 44. In a forward area 39 of the housing 46 the air flow accelerated by the fan 23 is split into the bypass duct airflow B and into the core duct airflow A so that the forward area 39 forms a so called bypass to core splitter. The nacelle 21 comprises a radially outer wall 65 and a radially inner wall 66 which defines also the outer wall of the bypass duct 22.

Fig. 4 to Fig. 8 show views of several embodiments of the gas turbine engine 10, which have essentially the same design structure and the same functionality as the gas turbine engine 10 according to Fig. 1 to Fig. 3, and differ from each other only in the manner described in more detail below. In order to avoid repetition, reference is made to the above description relating to Fig. 1 to Fig. 3 with regard to the basic construction and functionality of the gas turbine engines 10 shown in Fig. 4 to Fig. 8.

**Fig. 4** shows an enlarged partial longitudinal sectional view of an embodiment of the gas turbine engine 10 with a heat exchanger 42 which can be supplied with an annular air flow via an inlet 43. The inlet 43 is a so called ESS-style-inlet and surrounds the engine core 11 circumferentially. The heat exchanger 42 is designed as a so called matrix air-cooled oil cooler (MACOC) and can also be designed in another suitable way.

The heat exchanger 42 is arranged for cooling engine based oil using an air flow 50 which is passed from the fan 23 to the heat exchanger 42 and from the heat exchanger 42 into the bypass duct 22.

A flow passage 48 is delivering the air flow 50 from the annular ESS-style-inlet 43 of the flow passage 48 to the heat exchanger 42, and is returning the air flow 50 from the heat exchanger 42 through an annular outlet 49 in the core fairing 45 into the bypass duct 22. The ESS-style-inlet 43 of the flow passage 48 is located upstream the heat exchanger 42, and is located in the axially forward area 39 of the housing 46 between the radially inner annular wall 44 and the radially outer annular wall (core fairing) 45 of the housing 46.

The flow passage 48 is comprising guide vanes 51 upstream the heat exchanger 42. The guides vanes 51 are designed to straighten out the swirl air from the fan 23 and they also transmit load between an OGV casing 67 and the core duct (the gas path) outer wall 46, i.e. they provide a structural load path from the fan OGV 72 to core casings.

**Fig. 5** shows an enlarged partial longitudinal sectional view of a further embodiment of the gas turbine engine 10 with the heat exchanger 42 which can be supplied with an air flow 53 via an annular inlet 54 located in the core duct (the gas path) outer wall 41. The inlet 54 is a so called IPC(Intermediate Pressure Compressor)-style-inlet and is extending circumferentially over the entire circumference of the engine core 11. The annular IPC-style-inlet 54, which may be positioned anywhere down the IPC, is also located downstream of the stationary supporting structure 24 which includes so called engine sector stators (ESS) of the gas turbine engine 10.

The flow passage 48 is delivering the air flow 53 from the annular IPC-style-inlet 54 of the flow passage 48 to the heat exchanger 42, and is returning the air flow 53 from the heat exchanger 42 through the annular outlet 49 in the core fairing 45 into the bypass duct 22.

**Fig. 6** shows an enlarged partial longitudinal sectional view of a further embodiment of the gas turbine engine 10 with the heat exchanger 42 which can be supplied with an air flow 55 via an annular inlet 56 located in the bypass duct inner wall 45. The inlet 56 is a so called OGV-style-inlet and is arranged directly downstream of fan outer guide vanes 72 (OGV), which radially run through the bypass duct 22. Moreover, the annular OGV-style-inlet 56 can comprise a circumferential ram scoop that extends radially into the bypass duct 22 and guides the air flow 55 into the flow passage 48. An annular inner wall of the flow passage 48 is formed by the inner wall (core fairing) 45 of the bypass duct 22. Further, a radially outer annular wall 75, or an annular cooling duct outer wall respectively, of the flow passage 48 extends axially between the annular inlet 56 and the annular outlet 49 which both lead into the bypass duct 22. The annular cooling duct outer wall 75 is fixed to a radially outer area of the heat exchanger 42. In addition, the heat exchanger 42 is mounted on the bypass duct inner wall (core fairing) 45 and a firewall 58 is provided. The firewall 58 separates a front core zone 59 or flammable fluid front core zone respectively, in which the heat exchanger 42 is located, from a further zone 60.

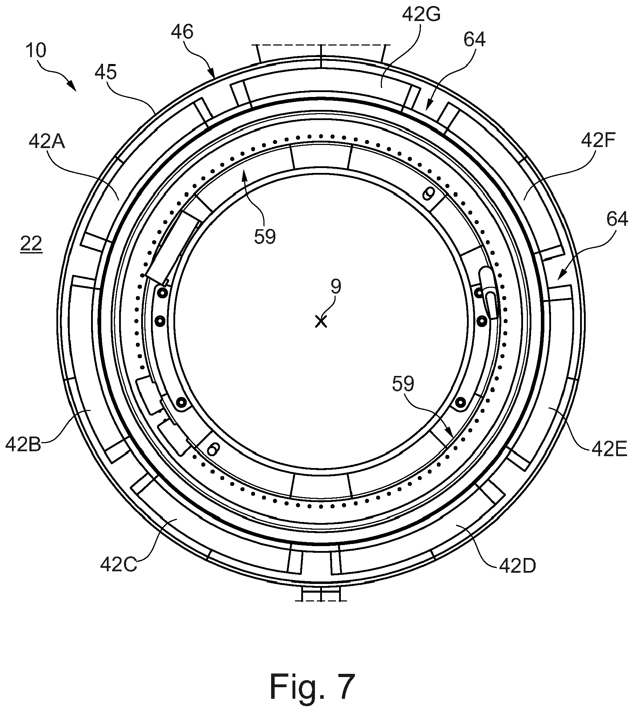

**Fig. 7** shows a schematic cross-sectional view of a possible configuration of the gas turbine engine 10 with, by way of example, several heat exchangers 42A to 42G extending circumferentially. The heat exchangers 42A to 42G are designed as PGB (Power Gear Box) coolers 42A, 42B, 42C, 42D, TBM cooler 42E, and aircraft generator coolers 42F, 42G, with some of the PGB coolers 42A, 42B preferably being designed as MACOC (Matrix Air Cooled Oil Cooler). The heat exchangers 42A to 42G provide cooling for multiple engine based oil systems and can be combined with each of the inlets 43, 54 or 56 described in more detail above. The number of heat exchangers and the type of heat exchangers may vary in different embodiments.

As can be seen in Fig. 6 and Fig. 7, annular inlet flow dividers 64 or annular inlet bifurcations or annular inlet wedges are provided between facing ends of the heat exchangers 42A to 42G that divert the air flow 50, 53 or 55 in direction to the heat exchangers 42A to 42G respectively.

The excess air from the annular inlets 43, 54 or 56 can be fed to other systems of the gas turbine engine 10. Inlets for these systems can be placed between the facing ends of the heat exchangers 42A bis 42G.

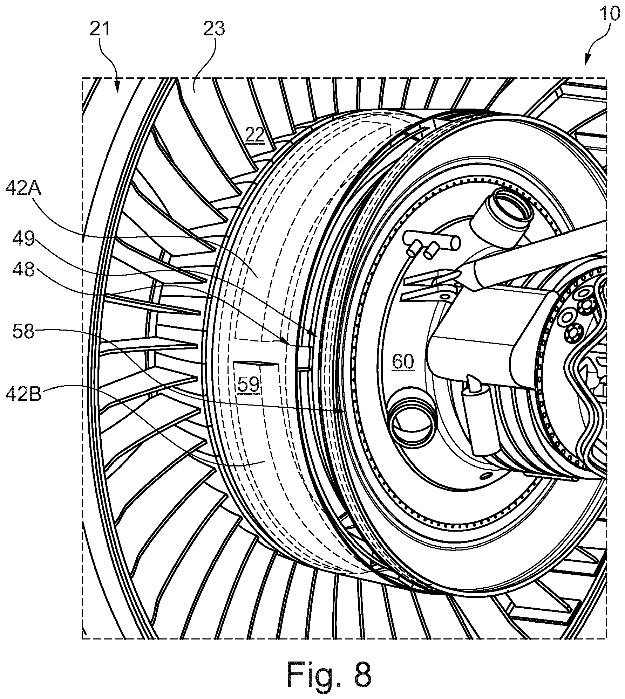

**Fig. 8** shows a three-dimensional partial view of the embodiment of the gas turbine engine 10 according to Fig 7 and Fig 6. All cooling of turbo machinery components, the power gear box 30 and other engine and/or aircraft systems like a cabin blower is provided through a circumferential array of heat exchangers 42A to 42G arranged in the core fairing 45. Ejectors can be provided if they are required.

## Claims

1. A gas turbine engine (10) including:
an engine core (11) having an engine core duct (47) surrounded by an annular outer wall (41) and having a radially annular inner wall (44);
a nacelle (21) surrounding the engine core (11) and a propulsive fan (23);
a bypass duct (22) for receiving a bypass air flow (B) accelerated by the propulsive fan (23), the bypass duct (22) being defined between the nacelle (21) and the core duct (47) which is designed for receiving a core air flow (A) accelerated by the propulsive fan (23), and which is located radially inside the bypass duct (22);
a housing (46) having an outer wall which is an inner wall (core fairing 45) of the bypass duct (22), and having an inner wall which is the outer wall (41) of the core duct (47);
whereby the housing (46) is extending axially from an area of the gas turbine engine (10) downstream of the fan (23) and is splitting the air flow accelerated by the fan (23) in an axially forward area (39) of the housing (46) so that the air flows partly into the bypass duct (22) and partly into the core duct (47);
at least two heat exchangers (42; 42A to 42G) for cooling engine based oil using an air flow which is passed from the fan (23) to the heat exchangers (42; 42A to 42G) and from the heat exchangers (42; 42A to 42G) into the bypass duct (22), the heat exchangers (42; 42A to 42G) being mounted radially between the radially inner annular wall (41) and the radially outer annular wall (45) of the housing (46); and
a flow passage (48) inside the housing (46) delivering the air flow (50; 53; 55) from an annular inlet (43; 54; 56) of the flow passage (48) to the heat exchangers (42; 42A to 42G), and returning the air flow (50; 53; 55) from the heat exchangers (42; 42A to 42G) through an annular outlet (49) in the radially outer annular wall (45) of the housing (46) into the bypass duct (22);
wherein the inlet (43; 54; 56) of the flow passage (48) is located upstream the heat exchangers (42; 42A to 42G), and is located in the forward area (39) of the housing (46) between the radially inner annular wall (41) and the radially outer annular wall (45) of the housing (46); and/or
in the radially inner annular wall (41) of the housing (46) downstream of the forward area (39) of the housing (46) and of outer guide vanes (72) extending radially through the bypass duct (22), and downstream of engine section stators (24) extending radially through the core duct (47), so air enters the inlet (54) from a stage of an IP-compressor unit (14); and/or
in the radially outer annular wall (45) of the housing (46) directly downstream of the outer guide vanes (72) and of the forward area (39) of the housing (46);
wherein the inlet (43; 54; 56) surrounds the engine core (11) circumferentially; and
wherein at least two heat exchangers (42; 42A to 42G) extend circumferentially and a flow divider (64) is provided between facing ends of the heat exchangers (42; 42A to 42G) that diverts the air flow (50; 53; 55) in direction to the heat exchangers (42; 42A to 42G) respectively.

2. The gas turbine engine of claim 1, wherein the flow passage (48) comprises guide vanes (51) upstream the heat exchangers (42; 42A to 42G) to straighten out the swirl air from the fan (23).

3. The gas turbine engine of claim 1 or 2, wherein the inlet (56) of the flow passage (48) located in the radial outer annular wall (45) of the housing (46) comprises a ram scoop that extends radially and circumferentially into the bypass duct (22), and guides the air flow (55) into the flow passage (48).

4. The gas turbine engine of any preceding claim, wherein the flow passage (48) comprises means which are arranged to direct the air flow (50; 53; 55) in the flow passage (48) in such a way that the air flow (50; 53; 55) streams towards the heat exchangers (42; 42A to 42G) at a defined angle.

5. The gas turbine engine of any preceding claim, wherein at least two heat exchangers (42; 42A to 42G) are provided that extend circumferentially, whereby a flow divider (64) is provided between facing ends of the heat exchangers (42; 42A to 42G) that diverts the air flow (50; 53; 55) in direction to the heat exchangers (42; 42A to 42G) respectively.

6. The gas turbine engine of any preceding claim, wherein a firewall (58) is provided in the housing (46) downstream the heat exchangers (42; 42A to 42G) that separates the heat exchangers (42; 42A to 42G) from a rear core fire zone.

7. The gas turbine engine of any preceding claim, wherein each heat exchanger (42; 42A to 42G) is mounted to the housing (46) or to the firewall(58).

8. The gas turbine engine of any preceding claim, wherein excess air from the circumferential inlet (43; 54; 56) is fed to other systems of the gas turbine engine (10), whereby inlets for these systems are placed between the heat exchangers (42; 42A to 42G).

9. The gas turbine engine of any preceding claim, wherein an ejector is provided in the flow passage (48) downstream of the heat exchangers (42; 42A to 42G) that accelerates the air flow (50; 53; 55) downstream the heat exchangers (42; 42A to 42G).

10. The gas turbine engine of any preceding claim, wherein the ejector is fluidly coupled with a cabin blower unit, a high pressure bleed or a compressor offtake.

11. The gas turbine engine of any preceding claim, wherein facing ends of the heat exchangers (42; 42A to 42G) are spaced apart from each other circumferentially, supporting thermal growth and oil porting.

12. The gas turbine engine of any preceding claim, wherein the radially outer annular wall (45) and radial inner annular wall (41) of the housing (46) comprise several removable panels to allow access underneath.
